(19) Europäisches Patentamt
European Patent Office
Office européen des brevets

(11) **EP 1 754 539 B1**

(12) **EUROPÄISCHE PATENTSCHRIFT**

(45) Veröffentlichungstag und Bekanntmachung des Hinweises auf die Patenterteilung:
**17.09.2008 Patentblatt 2008/38**

(51) Int Cl.:
*B02C 19/06* (2006.01)     *B02C 23/14* (2006.01)
*C01B 33/02* (2006.01)

(21) Anmeldenummer: **06118030.3**

(22) Anmeldetag: **28.07.2006**

(54) **Wirbelschicht-Strahlmühle und Verfahren zum Zerkleinern von Silicium**

Fluidized bed jet mill and process for comminuting of silicon

Broyeur à jet à lit fluidisé et procédé de fragmentation de silicium

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **18.08.2005 DE 102005039118**

(43) Veröffentlichungstag der Anmeldung:
**21.02.2007 Patentblatt 2007/08**

(73) Patentinhaber: **Wacker Chemie AG**
**81737 München (DE)**

(72) Erfinder: **Weidhaus, Dieter**
**84489 Burghausen (DE)**

(74) Vertreter: **Potten, Holger et al**
**Wacker Chemie AG**
**Zentralabteilung Patente,**
**Marken und Lizenzen**
**Hanns-Seidel-Platz 4**
**D-81737 München (DE)**

(56) Entgegenhaltungen:
**EP-A- 0 603 602          EP-A- 1 080 786**
**DE-A1- 4 239 611          DE-A1- 10 045 160**
**DE-A1- 10 200 688          DE-A1- 19 548 869**
**DE-A1- 19 943 670          US-A- 3 734 413**

## Beschreibung

Die Erfindung betrifft ein Verfahren und eine Vorrichtung zum Zerkleinern von Siliciumgranulat.

Wirbelschichtabscheideverfahren zur Produktion von hochreinem Siliciumgranulat für die Elektronikindustrie oder die Photovoltaikindustrie sind in zahlreichen Veröffentlichungen beschrieben und bekannt. Bei diesen Verfahren werden Siliciumpartikel in einer Wirbelschicht durch ein Gas fluidisiert und auf hohe Temperaturen aufgeheizt. Durch Einleiten eines siliciumhaltigen Gases in die Wirbelschicht (z. B. Silan, Tetrachlorsilan oder Trichlorsilan) kommt es zu einer Pyrolysereaktion an der Partikeloberfläche, wobei sich elementares Silicium auf der Partikeloberfläche niederschlägt und zu einem Wachstum der Partikel führt. Um diese Verfahren kontinuierlich zu betreiben, müssen größere "angewachsene" Partikel aus der Wirbelschicht als Produkt abgezogen und feine Partikel, so genannte Siliciumkeimpartikel, laufend zugeführt werden. Ein solches Verfahren beschreibt zum Beispiel das Patent US 3,963,838.

Für die Verwendung der Siliciumkeimpartikel in den beschriebenen Wirbelschichtverfahren sind mehrere Kriterien von Bedeutung: Die Siliciumkeimpartikel müssen eine hohe Reinheit aufweisen, damit auch das produzierte Siliciumgranulat den Anforderungen der Elektronik- und Photovoltaikindustrie entspricht. Im Allgemeinen sollte die Verunreinigung durch Metalle geringer als 100 ppbw, bevorzugt geringer als 10 ppbw sein, die Verunreinigung durch die Dotierstoffe Bor und Phosphor sollte geringer als 1000 pptw, bevorzugt geringer als 250 pptw, die Verunreinigung durch Kohlenstoff geringer als 1000 ppbw, bevorzugt geringer als 250 ppbw sein. Die Siliciumkeimpartikel sollten zwar eine geringere Größe als das Siliciumgranulat aufweisen, dürfen jedoch nicht beliebig klein sein. Zu feine Partikel werden nämlich mit dem Abgasstrom aus der Wirbelschicht ausgetragen und sind daher als Siliciumkeimpartikel ungeeignet. Die Grenze für den Austrag liegt je nach Betriebsbedingungen und Verfahren im Bereich von ca. 50 $\mu$m bis 250 $\mu$m. Ein Feinanteil in den Siliciumkeimpartikeln unterhalb dieser Grenze führt zu Siliciumverlusten und zu einer Staubbelastung der Abgassysteme in der Wirbelschichtabscheidung. Letztendlich wirkt sich die Korngrößenverteilung der Siliciumkeimpartikel auf die Partikel-Populationsbilanz der Wirbelschichtabscheidung und damit auch auf die Korngrößenverteilung des Siliciumgranulates aus. Um eine stationäre und nicht zu weite Korngrößenverteilung des Siliciumgranulates zu erreichen, ist es wichtig, dass die Siliciumkeimpartikel reproduzierbar mit einer definierten und engen Korngrößenverteilung hergestellt werden können.

Siliciumkeimpartikel werden neben der genannten Verwendung auch als Ausgangsmaterial in der Photovoltaik- und Elektronikindustrie benötigt. Beispiele für den Einsatz von feinkörnigem hochreinen Siliciumpulver sind die Herstellung von Siliciumkarbidpulver als Basisstoff für hochohmiges Substratmaterial für elektronische Bauteile, beschrieben in der deutschen Offenlegungsschrift DE19842078A1, und die Herstellung von Wafern für Photovoltaikanwendungen durch Aufschmelzen von feinkörnigem Siliciumpulver auf einem Substratmaterial und anschließendes Abkühlen und Erstarren, beschrieben im Patent US 5,496,416. Bisher ist es oftmals nicht möglich, sehr schwierig oder aufwendig, entsprechende Korngrößenverteilungen direkt aus der Wirbelschichtabscheidung zu erhalten oder aus dem Produkt der Wirbelschichtabscheidung durch Klassierung zu gewinnen.

Zur Herstellung von Siliciumkeimpartikeln sind verschiedene Technologien bekannt.

Nach US 4,207,360 neigen mit Inertgas fluidisierte Siliciumpartikel in einer Wirbelschicht hoher Temperatur (ca. 1000°C) zum Zerbrechen. Dabei entstehen die erwünschten Siliciumkeimpartikel. Es wird auch die Variante angeführt, diese Wirbelschicht mit einer Wirbelschicht zur Siliciumabscheidung zu einem integrierten Verfahren zu kombinieren. Beide Verfahrensvarianten haben den Nachteil des extrem hohen Energieaufwandes zur Wirbelschichtbeheizung und der kaum kontrollierbaren Korngrößenverteilung und Produktionsrate der Siliciumkeimpartikel.

US 4,314,525 beschreibt ein weiteres integriertes Verfahren, bei dem siliciumhaltige Gase, insbesondere Silane, bis zu ihrer Zersetzungstemperatur oder über ihre Zersetzungstemperatur hinaus aufgeheizt werden. Dabei zerfällt das siliciumhaltige Gas unter Bildung feinster Siliciumpartikel. Die bei dieser homogenen Gasphasenabscheidung entstehenden Partikel werden als Nuklei bezeichnet. Sie können als Siliciumkeimpartikel dienen. Nachteilig ist, dass die Nuklei eine Größe im Nanometerbereich haben und selbst durch Agglomerationseffekte nur Siliciumkeimpartikel von wenigen Mikrometern entstehen. Der Einsatz solcher Partikel als Siliciumkeimpartikel in einer Wirbelschicht zur Erzeugung von Silicumgranulat, das typischerweise eine Korngröße im Bereich von 50 $\mu$m bis zu mehreren Millimeter aufweist, führt zu einem Austrag eines großen Teiles dieser winzigen Siliciumkeimpartikel mit dem Gasstrom aus dem Reaktor. Um dies zu vermeiden sind zusätzliche Vorrichtungen notwendig.

Neben diesen thermisch-mechanisch bzw. chemischen Verfahren sind auch rein mechanische Zerkleinerungsverfahren zur Herstellung von Siliciumkeimpartikeln bekannt. Laut dem Abstract zu JP 57-067019 (Shin Etsu Hondatai) erhält man Siliciumkeimpartikel aus Siliciumgranulat, indem man dieses in einem Doppel-Walzenbrecher zerkleinert und anschließend über eine Siebung fraktioniert. Eine Kontamination der Siliciumkeimpartikel mit anderen Elementen wird dadurch verhindert, dass die Oberfläche der Walzen mit einer Schicht aus Silicium versehen ist. Die Materialpaarung Silicium-Silicium zwischen Walze und Mahlgut führt jedoch zu einem hohen Verschleiß der Siliciumschicht auf den Walzen, so dass nur kurze Laufzeiten der Maschine möglich sind, bis die Walzen ausgetauscht werden müssen.

Eine wesentliche Verbesserung hinsichtlich des Walzenverschleißes bei dennoch nur geringer Kontamination des Mahlgutes bringt der Einsatz von Walzen mit einer Hartmetalloberfläche und abgestimmter Walzenspaltgeometrie wie er in DE 102004048948 beschrieben ist.

Ein weiteres Zerkleinerungsverfahren beschreibt der Abstract zu JP 08-109013. Demnach kann vorgebrochenes stückiges Silicium in einer Stiftmühle zu Siliciumkeimpartikeln zerkleinert werden. Nachteiligerweise ist eine derartige Konstruktion kaum aus einem kontaminationsfreien oder gering kontaminierenden Werkstoff möglich. Es muss mit erheblicher Kontamination des Mahlproduktes gerechnet werden. Für einen Einsatz zur Herstellung von hochreinem Silicium ist daher eine nachgeschaltete nasschemische Reinigung der Oberfläche des Mahlproduktes unerlässlich.

US 4,691,866 beschreibt ein Verfahren, bei dem Siliciumgranulat nach dem Injektorprinzip mittels eines Gasstrahles auf hohe Geschwindigkeiten beschleunigt und gegen ein feststehendes Hindernis geschossen wird. Durch den Aufprall zerbrechen die Partikel zu den gewünschten Siliciumkeimpartikeln. Um bei diesem Verfahren die Kontamination gering zu halten, ist das Hindernis bevorzugt aus Silicium gefertigt. Die Stoffpaarung Silicium-Silicium führt aber, wie schon zum Walzenbrechverfahren ausgeführt, zu erheblichem Verschleiß des Hindernisses.

Strahlmühlen zur Zerkleinerung reinster Materialien sind in Fokin, A. P.; Melnikov, V. D.: Grinding Mills In The Production Of Ultrapure Substances - Zhurnal Vses. Khim. Ob-va im. D. I. Mendeleeva; Vol. 33, No. 4, pp. 62.70, 1988 beschrieben. Bei Strahlmühlen wird das körnige Aufgabegut durch Fluidstrahlen hoher Geschwindigkeit beschleunigt. Prallen diese beschleunigten Partikel auf Partikel geringerer Geschwindigkeit, so kommt es zu einer Stoßbeanspruchung, wobei die Partikel je nach Stoßenergie zerbrechen.

US 3,734,413 offenbart eine Fließbettstrahlmühle umfassend eine vertikal angeordnete zylindrische Strahlkammer mit einer Strahldüse am Boden der Strahlkammer, durch die ein Mahlgasstrom in die Strahlkammer eingebracht werden kann, einen direkt an die Strahlkammer sich anschließenden Gegenstrom-Schwerkraftsichter und einen Einlaß für ein Siliciumgranulat.

Eine Gegenstrahlmühle zur Herstellung von Siliciumkeimpartikel ist aus Rohatgi, Naresh K.; Silicon Production in a Fluidized Bed Reactor: Final Report - JPL Publication; No. 86-17, 1986 bekannt. Bei diesem Verfahren werden Partikel durch zwei aufeinander gerichtete Gasstrahlen beschleunigt und aufeinander geschossen, wobei diese zerbrechen. Jedoch nennen die Autoren nur eine geringe Ausbeute, weshalb das Siliciumgranulat mehrfach gemahlen werden muss.

US 4,424,199 beschreibt ein Verfahren, bei dem neben den anderen Gasströmen in einer Wirbelschicht zur Abscheidung von Silicium ein einzelner Gasstrahl hoher Geschwindigkeit eingesetzt wird, um einen Teil des Siliciumgranulates in der Wirbelschicht zu Siliciumkeimpartikeln zu zerkleinern. Vorteilhaft ist bei diesem Verfahren, dass kein Siliciumgranulat aus dem Abscheidereaktor entnommen, gemahlen und rückgeführt werden muss, nachteilig ist, dass auch hier die Produktionsrate und die resultierende Korngrößenverteilung der Siliciumkeimpartikel kaum kontrollierbar ist. Dies ist aber für eine kontrollierte Betriebsweise der Wirbelschichtabscheidung notwendig. Außerdem kann der Gasstrahl negative Wirkung auf den Abscheideprozess in der Wirbelschicht haben. Die Idee der Strahlmahlung innerhalb der Wirbelschicht zur Siliciumabscheidung wird auch von S. Lord im Patent US 5,798,137 nochmals aufgegriffen.

Die einfachste Bauform einer Strahlmühle ist die Fließbettstrahlmühle mit vertikal aufwärtsgerichtetem Gasstrahl. Bei diesen Strahlmühlen beschleunigt der Gasstrahl zum einen die Partikel, zum anderen sorgt er aber auch dafür, dass die Partikel in der Mahlkammer in Schwebe gehalten werden, also in fluidisiertem Zustand vorliegen. Üblicherweise sind solche Mühlen noch mit einer Klassiervorrichtung ausgestattet, die mit dem Gasstrom ausgetragene Partikel klassiert und zu grobe Partikel wieder zurück in die Wirbelschicht führt. Eine entsprechende Apparatur ist z. B. im Patent US 4,602,743 beschrieben.

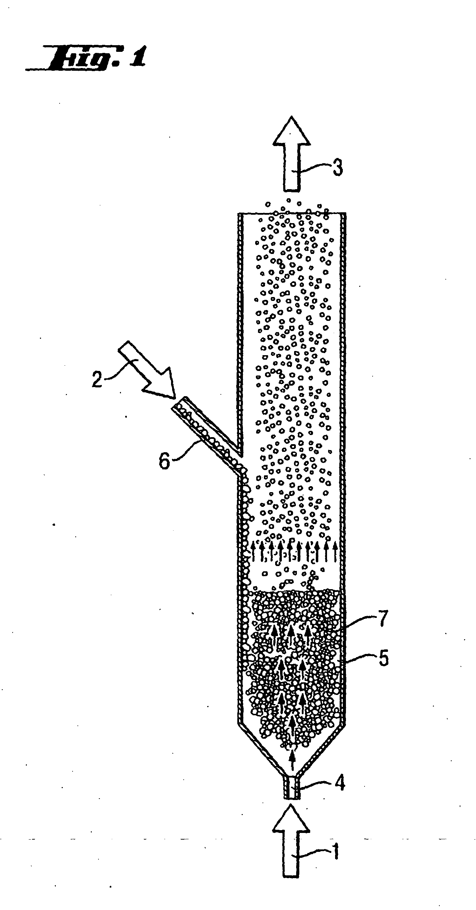

Fig. 1 zeigt den Aufbau einer herkömmlichen Wirbelschicht-Strahlmühle. Bei einer solchen Anordnung erfolgt die Zufuhr des Mahlgases (1) bzw. Mahlgasstromes über eine Strahldüse (4) (ausgeführt als einfache Düse oder als Laval-Düse), die am Boden der Mahlkammer (5) angeordnet ist. Das Aufgabegut (2) wird seitlich über einen Einlass (6) der Mahlkammer (5) zugeführt. In der Mahlkammer bildet sich aus Mahlgas (1) und Partikeln eine Wirbelschicht (7), in der die durch den Gasstrahl beschleunigten Partikel mit anderen Partikeln kollidieren und zerbrechen. Die zerkleinerten Partikel entweichen als gemeinsamer Strom (3) zusammen mit dem Mahlgasstrom (1) nach oben aus der Mahlkammer. Der Gasstrahl dient zum einen zur Beschleunigung und nachfolgenden Zerkleinerung der Partikel. Des Weiteren führt aber der Mahlgasstrom (1) auch zu einem Klassiereffekt in der Mahlkammer. Der Gasstrahl strömt zwar lokal mit sehr hoher Geschwindigkeit in die Kammer ein, aufgrund der Strahlaufweitung und der Wechselwirkung mit den Partikeln verteilt sich der Gasstrom dann aber gleichmäßig über den Mahlkammerquerschnitt. Ist die Sinkgeschwindigkeit eines Partikels in der Mahlkammer kleiner als die mittlere Gasgeschwindigkeit in der Mahlkammer (Volumenstrom des Mahlgases (1) bezogen auf den Strömungsquerschnitt der Mahlkammer), so wird dieser mit dem Mahlgasstrom (1) aus der Mahlkammer (5) gefördert. In Gas-Partikel-Systemen und insbesondere bei Windsichtprozessen bezeichnet man die Partikelgröße, deren Sinkgeschwindigkeit gerade der mittleren vorherrschenden Gasgeschwindigkeit z. B. in einem Sichtapparat entspricht als Trennkorngröße. Die Sinkgeschwindigkeit eines Partikels ist direkt abhängig von dessen Korngröße, nimmt mit steigender Korngröße stark zu und kann z. B. mittels untenstehender Formel berechnet werden:

$$18\,Re_{ws} + 3\,Re_{ws}^{1,5} + 0{,}3\,Re_{ws}^{2} - Ar = 0$$

mit

$$Re_{ws} = \frac{u_{ws}\,d_p}{\nu}$$

$$Ar = \frac{(\rho_s - \rho_f)\,g\,d_p^3}{\rho_f\,\upsilon^2}$$

mit

| | |
|---|---|
| $u_{ws}$ | Sinkgeschwindigkeit Einzelpartikel |
| $d_p$ | Partikeldurchmesser |
| $\upsilon$ | kinematische Viskosität des Fluids |
| $p_s, p_f$ | Dichte des Feststoffes bzw. des Fluids |
| $g$ | Erdbeschleunigung |

Mit der Festlegung von Mahlgasstrom und Mahlkammerquerschnitt werden also auch die Trennkorngröße und damit die obere Grenze der Korngrößenverteilung des Mahlproduktes festgelegt. Demgemäß steigt durch eine Erhöhung des Energieeintrages in die Mahlkammer durch einen höheren Gasdurchsatz die Trennkorngröße, somit auch die Obergrenze und folglich auch die mittlere Korngröße der zerkleinerten Partikel, die aus der Mahlkammer ausgetragen werden. Zugleich sinkt die Feststoffkonzentration in der Wirbelschicht. Energieeintrag und zu erzielende Korngröße sind direkt miteinander gekoppelt.

Strahlmühlen sind gut zur Zerkleinerung von hochreinem Siliciumgranulat geeignet, weil die Zerkleinerung im Wesentlichen durch Stoßbeanspruchung der Siliciumpartikel untereinander erfolgt. Eine Beanspruchung von Bauteilen, die Kontakt mit den Partikeln haben, ist nur von geringer Bedeutung. Zudem können die entsprechenden Bauteile mit einem nicht oder nur geringkontaminierendem Werkstoff ausgekleidet oder komplett aus diesem gefertigt werden. Die Energiezufuhr zur Zerkleinerung erfolgt alleine mit dem Gasstrahl. Werden hierzu Gase hoher Reinheit benutzt, so liegt auch hier keine Kontaminationsquelle vor. Der wesentliche Nachteil von herkömmlichen Strahlmühlen zur Herstellung von Siliciumkeimpartikeln ergibt sich daraus, dass der optimale Arbeitsbereich dieser Apparate nach Stand der Technik bei Korngrößen des Mahlproduktes von ca. 2 $\mu$m bis 10 $\mu$m liegt, also im Bereich der so genannten Feinstzerkleinerung. In diesem Bereich liegt der spezifische Gasverbauch bei weniger als 10 kg Gas pro kg Feststoff [Perry, Robert H.; Green, Don W.: Perry's Chemical Engineer's Handbook, 7th Edition, - McGraw-Hill; 1997, Section 20-47]. Je größer die Korngröße von Aufgabegut und Mahlprodukt wird, umso uneffektiver arbeitet die Mühle - der spezifische Gasverbrauch wird größer und das Verfahren damit unwirtschaftlich. Üblicherweise wird dann auf andere Zerkleinerungsverfahren, wie das oben angeführte Walzenbrechverfahren, gewechselt.

Im Patent US 5,346,141 wird dargelegt, dass ein wesentlicher Faktor für die Effektivität der Wirbelschicht-Strahlmahlung zur Herstellung von Siliciumkeimpartikel die Feststoffkonzentration in der Wirbelschicht ist, wobei man unter Feststoffkonzentration die volumetrische Konzentration der Feststoffpartikel versteht: Eine hohe Feststoffkonzentration im Bereich der Strahldüse führt zu einem starken Abfall der Mahlleistung, so dass dieses Patent lehrt, die Mahlung in einer stark verdünnten Wirbelschicht mit Feststoffkonzentrationen bevorzugt kleiner als 10 Vol.% durchzuführen. Dennoch bleibt die Mahlleistung, die mit dieser Anordnung erzielbar ist, sehr gering und ist mit einem hohen spezifischen Energie- bzw. Gasverbrauch verbunden. In Beispiel 2 von US 5,346,141 wird für die Zerkleinerung von Siliciumgranulat auf eine mittlere Korngröße von 445 $\mu$m ein spezifischer Stickstoffverbrauch von 48 kg Stickstoff pro kg Feststoff angegeben (Beispiel 2: 200 Liter/Minute Stickstoff; 5,2 Gramm/Minute Silicium), also ein ca. fünfmal so hoher Gasverbrauch, wie sonst bei der Feinst-Strahlmahlung üblich. Außerdem ist die Raum-Zeit-Ausbeute sehr gering. Laut dieser Schrift führt eine Erhöhung der Feststoffkonzentration zu einem weiteren Abfall der Mahlleistung.

Aufgabe der vorliegenden Erfindung ist es, eine Vorrichtung zur Verfügung zu stellen, welche es ermöglicht, Siliciumkeimpartikel einer Partikelgröße von 50 $\mu$m bis 1000 $\mu$m aus einem Siliciumgranulat einer Partikelgröße von 300 $\mu$m bis 5000 $\mu$m wirtschaftlich, d. h. kostengünstig und in reiner Form, herzustellen.

Diese Aufgabe wird gelöst durch eine Vorrichtung, umfassend eine vertikal angeordnete zylindrische Strahlkammer (8) mit einer Strahldüse (4) am Boden der Strahlkammer (8), durch die ein Mahlgasstrom (1) in die Strahlkammer (8) eingebracht werden kann, einen direkt an die Strahlkammer (8) sich anschließenden Gegenstrom-Schwerkraftsichter (9) und einen Einlass (6) für ein Siliciumgranulat (2), dadurch gekennzeichnet, dass die Strahlkammer (8) eine Länge hat, die für eine Aufweitung des Mahlgastromes auf den Querschnitt der Strahlkammer ausreicht und die Strahlkammer (8) einen kleineren Strömungsquerschnitt hat als der Sichter (9).

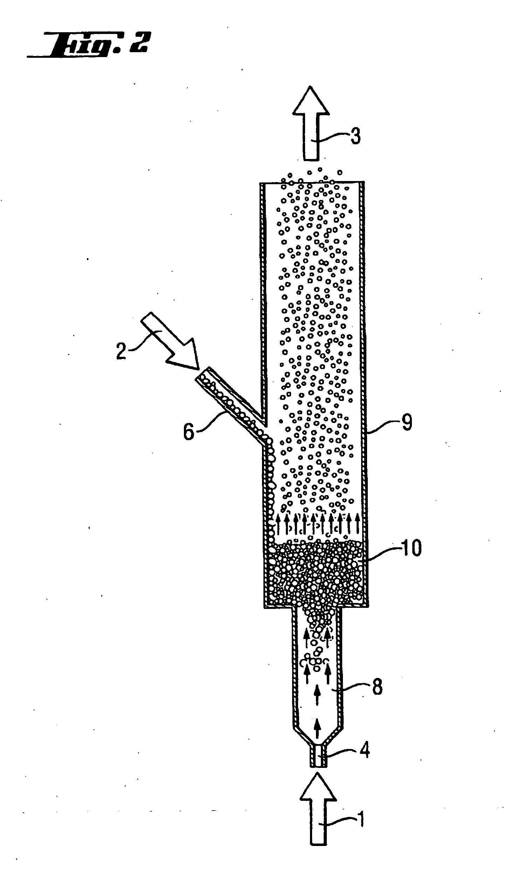

Fig. 2 stellt eine entsprechende Vorrichtung dar.

Um die einzelnen Partikel in einer Strahlmühle gut beschleunigen zu können, ist es wichtig, dass sich der Gasstrahl gut ausbilden kann. Dies ist, wie bereits in US 5,346,141 dargelegt, nur bei geringen Feststoffkonzentrationen möglich, da eine hohe Feststoffkonzentration im Bereich der Strahldüse die Strahlausbildung stört. Eine geringe Feststoffkonzentration ist aber wiederum nachteilig für die Mahlung, da die beschleunigten Partikel nur mit geringer Wahrscheinlichkeit mit anderen Partikeln kollidieren. Die erfindungsgemäße Vorrichtung ist nun so aufgebaut, dass Partikel in einem Bereich geringer Feststoffkonzentration mit einem Gastrom beschleunigt werden und diese Partikel dann in einen Bereich hoher Feststoffkonzentration fliegen, wo sie mit hoher Wahrscheinlichkeit mit anderen Partikeln kollidieren und zerbrechen.

Die erfindungsgemäße Vorrichtung unterliegt einem geringeren Verschleiß als die bekannten Vorrichtungen zur Herstellung von Siliciumkeimpartikeln. Sie ermöglicht die Herstellung von Siliciumkeimpartikeln, die ohne Nachreinigung eine geringe Produktkontamination aufweisen und damit insbesondere zur Verwendung als Siliciumkeimpartikel in Wirbelschichtverfahren zur Herstellung von hochreinem Siliciumgranulat als Einsatzstoff für die Elektronik- und Photovoltaikindustrie geeignet sind.

In der erfindungsgemäßen Vorrichtung bildet sich im Übergangsbereich von Strahlkammer (8) zum Gegenstrom-Schwerkraftsichter (9) eine lokal nach oben und unten begrenzte Wirbelschicht, die Mahlzone (10), aus. Die Mahlzone (10) weist eine hohe Feststoffkonzentration bevorzugt größer 20 Vol.% auf, während in der Strahlkammer (8) nur eine geringe Feststoffkonzentration bevorzugt kleiner 10 Vol.%, besonders bevorzugt kleiner 5 Vol.%, jedoch größer 0,1 Vol.%, vorliegt.

Die Wirbelschicht lokal hoher Feststoffkonzentration wird dadurch erzeugt, dass die Strahlkammer nach oben durch den Gegenstrom-Schwerkraftsichter begrenzt wird, wobei dessen Strömungsquerschnitt größer ist als der Strömungsquerschnitt der Strahlkammer und dass der Mahlgasstrom den Sichter passieren muss.

Die Geometrien von Strahlkammer und Gegenstrom-Schwerkraftsichter sowie der Mahlgasstrom sind vorzugsweise so aufeinander abgestimmt, dass im Gegenstrom-Schwerkraftsichter die mittlere Gasgeschwindigkeit der Sinkgeschwindigkeit der größten Partikel der gewünschten Korngrößenverteilung der Siliciumkeimpartikel entspricht. Vorzugsweise entspricht die Trennkorngröße im Sichter also der oberen Grenze der gewünschten Korngrößenverteilung der Siliciumkeimpartikel. Die mittlere Gasgeschwindigkeit des Mahlgasstroms (bezogen auf den Querschnitt der Strahlkammer bzw. des Sichters) in der Strahlkammer liegt höher als im Sichter. Die Trennkorngröße in der Strahlkammer ist also größer als im Sichter, sollte aber den mittleren Bereich der Korngrößenverteilung der Siliciumpartikel des Aufgabegutes nicht überschreiten, damit noch ausreichend Partikel in die Strahlkammer gelangen können.

Siliciumpartikel des Aufgabegutes, die größer als die Trennkorngröße im Gegenstrom-Schwerkraftsichter, aber kleiner als die Trennkorngröße in der Strahlkammer sind, sammeln sich in der Mahlzone und bilden eine lokale Wirbelschicht hoher Feststoffkonzentration. Nur Siliciumpartikel des Aufgabegutes, die größer als die Trennkorngröße in der Strahlkammer sind, gelangen in die Strahlkammer, werden dort beschleunigt und auf die Wirbelschicht hoher Feststoffkonzentration geschossen, wobei die Partikel zerkleinert werden. Ausreichend zerkleinerte Siliciumpartikel, die kleiner als die Trennkorngröße im Gegenstrom-Schwerkraftsichter sind, werden als Mahlprodukt mit dem Gasstrom aus dem Sichter ausgetragen.

Der Vorteil dieser Anordnung liegt darin, dass Partikel in der Strahlkammer, ähnlich wie in einem Feststoffinjektor, sehr gut beschleunigt und dann auf eine Wirbelschicht hoher Dichte geschossen werden, was dort zu einer sehr effektiven Zerkleinerung führt. Gleichzeitig führt die Gegenstrom-Schwerkraftsichtung zu einer definierten Obergrenze der Kornverteilung der erzeugten Siliciumkeimpartikel.

Mit der erfindungsgemäßen Vorrichtung lassen sich Siliciumkeimpartikeln im Korngrößenbereich von ca. 50 $\mu$m bis 1000 $\mu$m mit einer Effektivität herstellen, wie sie sonst nur für die Feinstzerkleinerung von Teilchen einer Größe im Bereich 2 bis 10 $\mu$m üblich ist.

Es hat sich gezeigt, dass eine besonders effektive Mahlung erzielt werden kann, wenn der Strömungsquerschnitt (Fläche) der Strahlkammer mindestens 10 % bis 30 %, bevorzugt 20 % bis 30 %, kleiner als der Strömungsquerschnitt des Gegenstrom-Schwerkraftsichters gewählt wird.

Bevorzugt ist die Strahlkammer mindestens doppelt so lang, bevorzugt 2 bis 8 mal so lang, wie die Strecke, die der Mahlgasstrom von dem Austritt aus der Düse bis zur Aufweitung auf den Querschnitt der Strahlkammer benötigt. Mit der für Gasfreistrahlen üblichen Strahlaufweitung von ca. 18° bis 20° (Halbwinkel) ist eine Auslegung der Strahlkammer leicht möglich.

Durch den erfindungsgemäßen Aufbau von Strahlkammer und Sichter wird der Energieeintrag durch den Mahlgasstrom und die zu erzielende Korngröße voneinander entkoppelt. Alleine die Trennkorngröße des Gegenstrom-Schwerkraftsichters definiert die Obergrenze der Korngrößenverteilung des Mahlproduktes.

In einer bevorzugten Ausführungsform wird das Siliciumgranulat nicht in die Strahlkammer, sondern in den Sichter aufgegeben. Dadurch wird das Siliciumgranulat, noch bevor es in die Mahlzone gelangt, klassiert. Partikel im Aufgabegut, die bereits kleiner als die Trennkorngröße des Sichters sind, werden mit dem Gasstrom ausgetragen und gelangen nicht in die Mahlzone, wo deren Zerkleinerung zu unerwünschter Feinstaubbildung beitragen würde.

In einer besonders bevorzugten Ausführungsform erfolgt die Zufuhr des Siliciumgranulats in den Sichter oberhalb der Strahlkammer, wobei mit einer Wägeeinheit laufend das Gewicht an Siliciumpartikeln in der Strahlkammer und im Sichter ermittelt wird und über eine Regeleinheit die Dosierung des Siliciumgranulats so geregelt werden kann, dass eine optimale Effizienz der Mahlung erzielt wird.

Die Effektivität der Mahlung hängt stark ab von der jeweiligen Beladung der Mühlen-Sichter-Einheit. Wird zu wenig Siliciumgranulat in den ersten Sichter dosiert, so sinkt die Feststoffkonzentration in der Mahlzone und die Energie des Gasstrahles wird nicht voll ausgenutzt. Wird zuviel eindosiert, so wird die Mahlzone und der erste Sichter mit Partikeln überladen, die Mahlleistung und die Trennleistung des ersten Sichters sinkt ab. Es wurde festgestellt, dass bis zu einer Beladung von ca. 0,30 kg/h Feststoff pro kg/h Gas das Gewicht an Siliciumgranulat in der Mühlen-Sichter-Einheit konstant gehalten werden kann und mehr als 75 % an Siliciumkeimpartikel im Zielkorngrößenbereich bezogen auf das Aufgabegut erreicht werden. Entsprechend der steigenden Beladung steigt auch die Effektivität der Mahlung an. Über einer Beladung von ca. 0,30 kg/h Feststoff pro kg/h Gas steigt das Gewicht an Siliciumgranulat in der Mühlen-Sichter-Einheit dann laufend an, die Anlage wird überfüllt und unzerkleinerte Partikel gelangen mit ins Produkt.

Um die Anlage optimal zu betreiben, ist daher die Mühlen-Sichter-Einheit vorzugsweise mit einer Wägung (z. B. mittels einer Wägezelle) versehen. Diese wiegt die Mühlen-Sichter-Einheit vorzugsweise kontinuierlich, und ermittelt beispielsweise mittels einer Rechnereinheit daraus das Gewicht der Partikel in dieser Einheit, den sogenannten Hold-Up. Durch die Zudosierung des Siliciumgranulats, vorzugsweise gesteuert über die Rechnereinheit, wird der Mengenstrom der Zudosierung so geregelt, dass der Hold-Up möglichst konstant gehalten wird.

Der besondere Vorteil dieser Anordnung gegenüber einer reinen Regelung einer konstanten Zugabemenge liegt darin, dass sich die Korngrößenverteilung des Siliciumgranulats auf das Mahlergebnis nur noch gering auswirkt.

In einer bevorzugten Ausführungsform der Erfindung ist der Gegenstrom-Schwerkraftsichter in Form eines Zickzack-Sichters mit rechteckigem Strömungsquerschnitt direkt oberhalb anschließend an die Strahlkammer ausgeführt, wobei der Strömungsquerschnitt des Sichters größer als der Strömungsquerschnitt der Strahlkammer ist. Zickzack-Sichter sind im Stand der Technik bekannt und beispielsweise in der deutschen Patentschrift DE 1 135 841 beschrieben. Sie bieten den Vorteil einer höheren Partikel-Trennschärfe im Vergleich zu Sichtern mit geradem Strömungsdurchgang.

In dieser Ausführungsform der Erfindung ist die Mahlzone ein lokal eng begrenzter Bereich hoher Feststoffkonzentration im Bereich der Aufweitung des Strömungsquerschnittes von der Strahlkammer zum Zickzack-Sichter.

Vorzugsweise schließt sich an den ersten Sichter ein zweiter Gegenstrom-Schwerkraftsichter, bevorzugt wieder ein Zickzack Sichter mit rechteckigem Strömungsquerschnitt an, dessen Strömungsquerschnitt nochmals größer als der des ersten Sichters ist. Vorzugsweise gelangen die gemahlenen Partikel zusammen mit dem Mahlgasstrom und eventuell zusätzlich eingedüstem Gas vom ersten Sichter in den zweiten Sichter. Dort werden entsprechend der Trennkorngröße dieses Sichters definierte, in der Regel unerwünschte, zu fein gemahlene Partikel mit dem Gasstrom nach oben ausgetragen und die gewünschte Korngrößenfraktion der Siliciumkeimpartikel fällt nach unten in einen Sammelbehälter. Zu fein gemahlene Siliciumpartikel können aus dem Abgasstrom, z. B. mittels Zyklon und Filter, abgetrennt werden.

Vorzugsweise ist der Gaseinlassbereich zumindest eines Sichters jeweils mit einem zusätzlichen Gaseinlass versehen, um eine weitere Feinjustierung der Trennkorngrößen der Sichter zu ermöglichen. Hier kann jeweils ein zusätzlicher Gasstrom eingespeist werden, wodurch die Trennkorngröße der Sichter jeweils zu größeren Korngrößen hin verschoben wird. Als Sichtgas wird vorzugsweise Stickstoff hoher Reinheit verwendet.

Durch die Dimensionierung der Strömungsquerschnitte der beiden Gegenstrom-Schwerkraftsichter, des Mahlgasdüsenquerschnitts, der Einstellung des Düsenvordruckes der Mahlgasdüse und der Gasströme der zusätzlichen Gaseinlässe der Sichter lässt sich die Obergrenze und die Untergrenze der Korngrößenverteilung der Siliciumkeimpartikel festlegen: Im allgemeinen legt man durch den Düsenvordruck und den Düsendurchmesser entsprechend den allgemeinen Gesetzen für kompressible Gase den Gasstrom und die maximale Strahlgeschwindigkeit fest. Damit ist auch der Energieeintrag zur Zerkleinerung festgelegt. Die Dimensionierung der Sichter erfolgt nun so, dass sich zusammen mit dem gegebenen Gasstrom jeweils die gewünschte Trennkorngröße ergibt.

Auch der produzierte, in der Regel unerwünschte, Feinstaub kann kontaminationsfrei bzw. kontaminationsarm gewonnen werden, wenn die Einheit zur Abtrennung des Feinstaubes aus dem Abgasstrom der Anlage entsprechend ausgeführt wird. Dazu ist der Einsatz eines ausgekleideten Zyklons und eines Filters - bevorzugt eines Tuchfilters mit hochreinem Kunststoffgewebe aus PTFE - besonders geeignet.

Die erfindungsgemäße Vorrichtung weist mit Ausnahme der Dosiereinheit für die Zuführung des Aufgabegutes keine bewegten Teile auf. Die Vorrichtung besitzt zudem eine einfache Geometrie. Dies ist besonders für eine Auskleidung mit einem nicht- oder nur gering-kontaminierenden Material günstig. Ein nichtkontaminierendes Auskleidungsmaterial ist z. B. monokristallines Silicium, dessen Reinheit gleich oder höher ist als die des Aufgabegutes. Unter gering-kontaminierenden Materialien versteht man Werkstoffe, die eine hohe Reinheit aufweisen und deren Anteil an Stoffen, die sich negativ auf die anwendungstechnischen Eigenschaften auswirken (vor allem Bor, Phosphor, Metalle) sehr niedrig, bevorzugt kleiner als 100 ppmw ist, wie z. B. Kunststoffe hoher Reinheit, die ohne Additive (Licht- und Hitzestabilisatoren, Antioxidantien, Verarbeitungshilfsmittel, Modifikatoren, Flammschutzmittel) hergestellt wurden (Polyethylen, Polypropylen, Polytetrafluorethylen, Polyurethan, Ethylen-Tetrafluorethylen-Copolymer, Perfluoralkoxy-Copolymer oder Halar®).

Die Erfindung betrifft auch ein Verfahren zum Zerkleinern von Siliciumgranulat zu Siliciumkeimpartikeln unter Einsatz einer erfindungsgemäßen Strahlmühle, welches sowohl die Vorteile als auch die Effizienz einer Strahlmahlung auf dem Niveau der Feinst-Strahlmahlung bietet.

Bei diesem Verfahren wird Siliciumgranulat dadurch zerkleinert, dass sich aus dem Siliciumgranulat in der Mahlzone eine Wirbelschicht hoher Feststoffkonzentration bildet und dass einzelne Siliciumpartikel des Siliciumgranulats in einer zylindrischen Strahlkammer, in der nur eine geringe Feststoffkonzentration vorliegt, durch einen Mahlgasstrom hoher Geschwindigkeit beschleunigt werden und auf die Wirbelschicht hoher Feststoffkonzentration auftreffen, wobei Siliciumgranulat und Siliciumpartikel zerbrechen.

Unter hoher Feststoffkonzentration ist vorzugsweise eine volumetrische Feststoffkonzentration von 20 bis 50 Vol.% zu verstehen.

Unter einer geringen Feststoffkonzentration ist eine volumetrische Feststoffkonzentration von kleiner 10 Vol.%, bevorzugt kleiner 5 Vol.%, jedoch größer 0,1 Vol.%, zu verstehen.

Das zu zerkleinernde Siliciumgranulat hat vorzugsweise eine Größe von 300 $\mu$m bis 5000 $\mu$m.

Die erzeugten Siliciumkeimpartikel haben vorzugsweise eine Größe von 50 $\mu$m bis 1000 $\mu$m, besonders bevorzugt von überwiegend 150 $\mu$m bis 500 $\mu$m, wobei der massenbezogene Medianwert der Korngrößenverteilung besonders bevorzugt zwischen 300 $\mu$m und 400 $\mu$m liegt und der Massenanteil an Partikeln kleiner 150 $\mu$m und größer 500 $\mu$m kleiner als 10 % ist.

Als Mahlgas wird vorzugsweise ein Gas hoher Reinheit eingesetzt, wobei unter hoher Reinheit ein Anteil an Verunreinigungen von nicht mehr als 5 ppm verstanden wird. Beispielsweise kann gereinigte Luft, Argon oder Stickstoff, bevorzugt gereinigter Stickstoff mit einer Reinheit von größer 99,9995 Vol.%, eingesetzt werden.

Der Mahlgasstrahl ist vorzugsweise vertikal nach oben gerichtet. Zur effektiven Beschleunigung der Partikel sind Eintrittsgeschwindigkeiten an der Düse von mehr als 300 m/s nötig, bevorzugt werden Geschwindigkeiten von 400 bis 800 m/s eingestellt. Bei vorgegebener Strahlkammergeometrie und Gasdurchsatz kann die Geschwindigkeit durch den Düsendurchmesser eingestellt werden. Der Durchsatz lässt sich leicht durch Einstellung des Gasdruckes vor der Düse justieren.

Mahlgasstrom und Strömungsquerschnitt der Strahlkammer sind so ausgelegt, dass die Trennkorngröße in der Strahlkammer größer als die größten Partikel der gewünschten Korngrößenverteilung der Siliciumkeimpartikel und kleiner als die mittlere Korngröße der Siliciumpartikel des Aufgabegutes ist.

Das erfindungsgemäße Verfahren weist einen niedrigen spezifischen Gasverbrauch vorzugsweise von weniger als 10 kg Gas pro kg Mahlprodukt auf und ermöglicht zugleich eine hohe Ausbeute an Siliciumkeimpartikeln.

Das erfindungsgemäße Verfahren ermöglicht eine kontaminationsfreie Zerkleinerung eines Siliciumgranulats, es ermöglicht zudem, Siliciumkeimpartikel einer definierten engen Korngrößenverteilung herzustellen, ohne dass das Mahlprodukt einer nachfolgenden Siebung unterzogen werden muss. Ein zusätzlicher Siebschritt würde zusätzlichen Arbeitsaufwand und potentielle Kontamination bedeuten. Zudem würde sich die Ausbeute an Siliciumpartikeln, ausgedrückt in Menge an erzeugten Siliciumpartikeln pro Menge Aufgabegut, mindern.

Es werden Siliciumkeimpartikel einer Größe von 50 $\mu$m bis 1000 $\mu$m, besonders bevorzugt von überwiegend 150 $\mu$m bis 500 $\mu$m hergestellt, wobei der massenbezogene Medianwert der Korngrößenverteilung besonders bevorzugt zwischen 300 $\mu$m und 400 $\mu$m liegt und der Massenanteil an Partikeln kleiner 150 $\mu$m und größer 500 $\mu$m kleiner als 10 % ist.

Diese definiert enge Korngrößenverteilung der hochreinen Siliciumkeimpartikel ist wünschenswert, da feineres Material bei der Zudosierung der Siliciumkeimpartikel in einen Wirbelschichtabscheidereaktor mit dem Abgasstrom sofort ausgetragen werden würde. Gröbere Siliciumkeimpartikel würden in der Wirbelschicht weiter anwachsen und so die Gesamtkornverteilung in der Wirbelschicht stören.

Durch das erfindungsgemäße Verfahren können neben den Siliciumkeimpartikeln zur Wirbelschichtabscheidung auch gezielt andere Siliciumkörnungen für besondere Anwendungen gemahlen werden. Insbesondere sind dies Anwendungen, die nach einer definierten und sehr feinen Kornverteilung sowie extrem hoher Reinheit verlangen, wie beispielsweise Siliciumpartikel die als Basismaterial in der Photovolatik- und Elektronikindustrie benötigt werden.

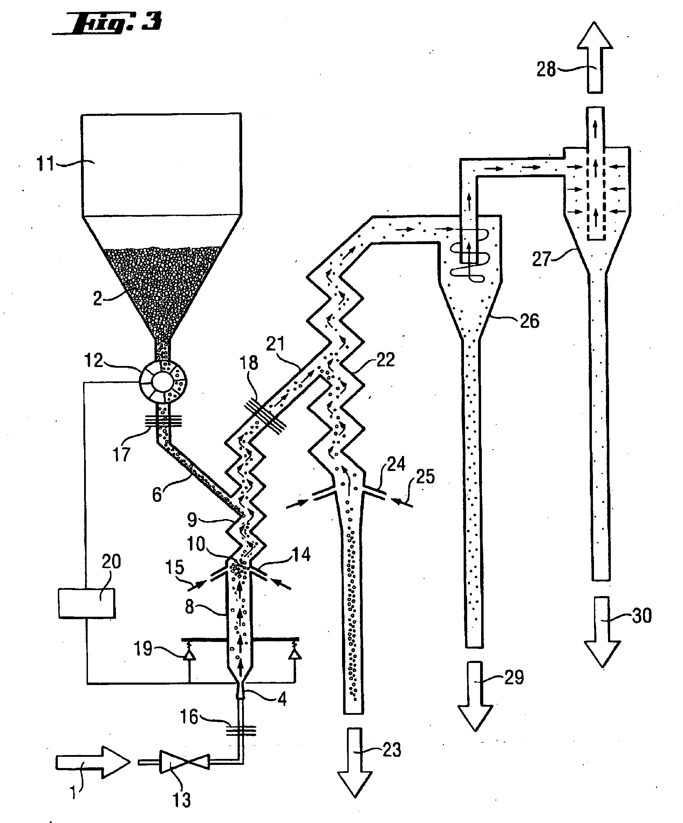

Fig. 3 zeigt eine besonders bevorzugte Ausführungsform der erfindungsgemäßen Vorrichtung. Am Beispiel dieser Vorrichtung wird im Folgenden eine bevorzugte Ausführungsform des erfindungsgemäßen Verfahrens beschrieben:

Aus einem Vorlagebehälter (11) wird das Siliciumgranulat (2) mittels einer Dosiervorrichtung (12) über eine Zuführleitung (6) in den ersten Zickzack-Sichter (9) dosiert. Direkt unterhalb des ersten Sichters (9) befindet sich die Strahlkammer (8). In diese wird der Mahlgasstrom (1) über eine Lavaldüse (4) eingedüst. Zur Einstellung des Mahlgasstromes dient ein Drosselorgan (13). Im Übergang zwischen Strahlkammer (8) und erstem Sichter (9) bildet sich eine Wirbelschicht, die Mahlzone (10). Über Gaseinlässe (14) kann ein zusätzlicher Gasstrom (15) zur Justierung der Sichtung eingespeist werden. Durch Kompensatoren (16), (17) und (18) sind die Strahlkammer (8) und der erste Sichter (9) vom Rest der Anlage kräftemäßig entkoppelt. Eine Wägevorrichtung (19) bestimmt das Gewicht von Strahlkammer (8), erstem Sichter (9) und den darin befindlichen Partikeln. Mit einer Rechnereinheit (20) wird daraus das Gewicht der Partikel in der Mahlkammer-Sichter-Einheit bestimmt. Dieser Wert dient als Führungsgröße zur Regelung der Aufgabegutdosierung. Partikel mit einem Durchmesser kleiner als das Trennkorn des ersten Sichters (9), gelangen vom ersten Sichter (9) zusammen mit dem Mahlgasstrom und eventuell zusätzlichem Sichtgas über eine Verbindungsleitung (21) in den zweiten Zickzack-Sichter (22). Die Partikel im angestrebten Zielkorngrößenbereich fallen nach unten. Der Partikelstrom (23) wird in einem Behälter gesammelt. Über Gaseinlässe (24) kann ein zusätzlicher Gasstrom (25) zur Justierung der zweiten Sichtung in den zweiten Sichter (22) eingespeist werden. Zu feine Partikel werden zusammen mit dem Mahlgasstrom und eventuell zusätzlichem Sichtgas oben aus dem zweiten Sichter (22) ausgetragen. In einem Zyklon (26) und einem nachgeschalteten Filter (27) werden diese Partikel vom Gasstrom getrennt. Der so gereinigte Gasstrom (28) entweicht aus der Anlage. Die zu fein gemahlenen Partikel fallen aus Zyklon und Filter nach unten. Die entsprechenden Partikelströme (29) und (30) können wiederum in Behältern gesammelt werden.

Besonders bevorzugt bestehen die mit dem Siliciumpartikeln in Berührung kommenden Teile der erfindungsgemäßen Vorrichtung aus einer äußeren metallischen Hülle mit einer Innenwand, die mit einer Beschichtung versehen ist. Als Beschichtung wird Silicium in mono- oder polykristalliner Form oder ein Kunststoff, bevorzugt Polyethylen, Polypropylen, Polytetrafluorethylen, Polyurethan, Ethylen-Tetrafluorethylen-Copolymer, Perfluoralkoxy-Copolymer oder Halar® eingesetzt. Die Materialien werden vorzugsweise in hochreiner Form eingesetzt.

Besonders bevorzugt werden in eine derart beschichtete Strahlkammer und/oder in einen derart beschichteten Sichter Inliner, bevorzugt aus polykristallinem oder monokristallinem Silicium oder Quarz, formschlüssig eingebaut. Die Materialien werden vorzugsweise in hochreiner Form eingesetzt. Eine Abdichtung zwischen den Inlinern bzw. zwischen Beschichtung und Inliner ist nicht notwendig.

Bei der Durchführung des erfindungsgemäßen Verfahrens füllt Siliciumfeinstaub die Spalten zwischen den Inlinern bzw. zwischen Beschichtung und Inliner, so dass diese Spalten sich mit fortschreitender Betriebsdauer zusetzen.

Auch wenn im Vergleich zu anderen Zerkleinerungsverfahren der Verschleiß eine untergeordnete Rolle spielt, hat sich gezeigt, dass die Bauteile Strahlkammer, Übergang Strahlkammer-Sichter und erster Sichter einem höheren Verschleiß unterliegen als die restlichen produktführenden Bauteile (Verschleiß etwa um Faktor 10 bis 100 höher). In einer anderen bevorzugten Ausführung sind daher die Bauteile Strahlkammer, Übergang Strahlkammer-Sichter und erster Sichter nur mit Polyurethan innen ausgekleidet, da sich Polyurethan als besonders verschleißfest erwiesen hat.

Ein Vergleich der Analysen von Aufgabegut und erzeugten Siliciumkeimpartikeln zeigt, dass mit einer derartigen Vorrichtung nahezu kontaminationsfrei gemahlen werden kann.

Fig. 1 zeigt den Aufbau einer herkömmlichen Wirbelschicht-Strahlmühle.

Fig. 2 zeigt den Aufbau einer erfindungsgemäßen Vorrichtung.

Fig. 3 zeigt eine bevorzugte Ausführungsform der erfindungsgemäßen Vorrichtung.

Die schwarzen Pfeile in den Figuren 1 bis 3 markieren jeweils den Weg der Gasströmung in der Vorrichtung.

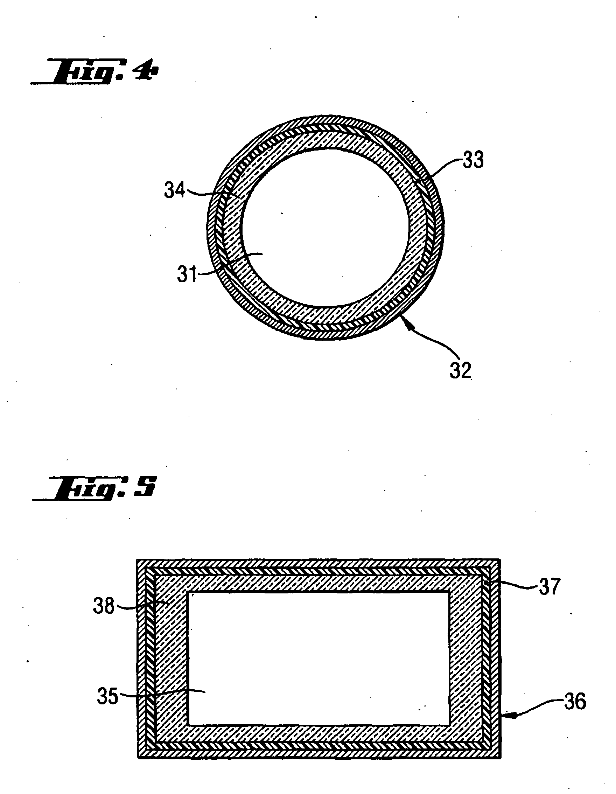

Die Figuren 4, 5 und 6 erläutern die Strömungsführung und das bevorzugte Auskleidungskonzept der Vorrichtung.

Fig. 4 zeigt einen Querschnitt durch eine Strahlkammer (32) senkrecht zur Richtung des Mahlgasstromes. Der Strömungsquerschnitt für die Mahlgasströmung (31) ist kreisförmig. Der metallische Grundkörper der Strahlkammer (32) ist innen mit einer Beschichtung aus hochreinem Kunststoff (33) versehen. Der Strömungskanal wird von einem Siliciuminliner (34) begrenzt.

Fig. 5 zeigt einen Querschnitt durch einen der Zickzack-Sichter senkrecht zur Richtung der Mahlgasströmung. Der Strömungsquerschnitt für die Mahlgasströmung (35) ist rechteckig. Der metallische Grundkörper (36) ist innen mit einer Beschichtung aus hochreinem Kunststoff (37) versehen. Der Strömungskanal wird von einem Siliciuminliner (38) begrenzt.

Der Strömungsquerschnitt für die Gasströmung ist im ersten Sichter größer als in der Strahlkammer. Der Strömungsquerschnitt für die Gasströmung ist im zweiten Sichter größer als im ersten Sichter.

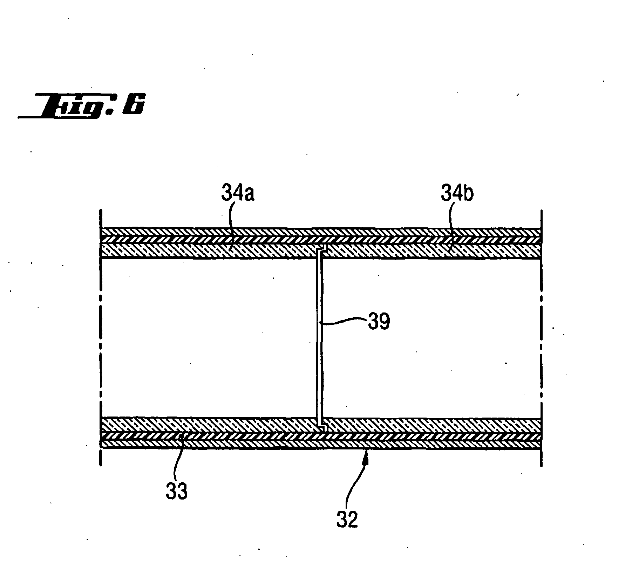

Fig. 6 zeigt einen Längsschnitt durch einen Teil der Strahlkammer in Richtung des Mahlgasstromes und verdeutlicht den Einbau der Siliciuminliner (34a) und (34b). Die Inliner (34a) und (34b) sind formschlüssig in die mit einer Beschichtung aus hochreinem Kunststoff (33) versehenen metallischen Grundkörper der Strahlkammer (32) eingebaut. Eine besondere Befestigung oder Verklebung ist nicht notwendig. Die einzelnen Inliner (34a) und (34b) sind miteinander durch Vor- und Rücksprung verbunden. Der dabei entstehende Spalt (39) füllt sich im Betrieb der Anlage mit Feinststaub und stabilisiert die Inliner zusätzlich. Eine Kontamination des Mahlproduktes durch Hinterwanderung der Inliner kann aufgrund der Kunststoffbeschichtung nicht erfolgen.

Das folgende Beispiel dient der weiteren Erläuterung der Erfindung:

Beispiel 1

In einer Mahlanlage, wie in Fig. 3 dargestellt, wurde hochreines Siliciumgranulat zerkleinert. Ziel der Mahlung war es, aus Siliciumgranulat mit einer Korngrößenverteilung zwischen 250 $\mu$m und 4000 $\mu$m bei einem mittleren Durchmesser (massebezogen) von 711 $\mu$m, Siliciumkeimpartikel mit einer Korngrößenverteilung zwischen etwa 150 $\mu$m und 500 $\mu$m herzustellen, deren mittlerer Durchmesser (massebezogen) zwischen 300 $\mu$m und 400 $\mu$m liegen sollte.

Der Strömungsquerschnitt der Strahlkammer betrug 3020 mm$^2$, der Strömungsquerschnitt des ersten Zickzack-Sichters betrug 4200 mm$^2$ und der Strömungsquerschnitt des zweiten Zickzack-Sichters betrug 19600 mm$^2$. Die Mahlstromdüse, eine Lavaldüse, hatte einen engsten kreisrunden Querschnitt mit einem Durchmesser von 4 mm. Die Strahlkammer hatte eine Länge von 550 mm.

Die Mahlanlage wurde 14,5 Stunden betrieben. Die mittlere Dosierung des Aufgabegutes betrug dabei 17,83 kg/h. Über die Lavaldüse wurde als Mahlgasstrom 52 Nm$^3$/h gereinigter Stickstoff der Qualität 5.5 (Reinheit > 99,9995%) eingestellt, die Beladung lag also im Mittel bei 0,274. In den ersten Sichter wurde kein zusätzlicher Sichtgasstrom eindosiert. In den zweiten Sichter wurden 4 Nm$^3$/h gereinigter Stickstoff als zusätzlicher Sichtgasstrom eindosiert.

Mit Hilfe einer Absaugvorrichtung im Abgasstrom der Anlage wurde der Druck in der Strahlkammer-Sichter-Kombination in etwa auf atmosphärischem Niveau gehalten (1013 hPa +/- 100 hPa).

Während des Mahlvorganges wurde durch Wägung, wie beschrieben, die Menge an Siliciumgranulat in Strahlkammer und erstem Sichter auf konstant 2,5 kg geregelt.

Aus den Abmessungen und den Gasströmen ergibt sich für die Strahlkammer eine Trennkorngröße von 623 $\mu$m, für den ersten Sichter eine Trennkorngröße von 516 $\mu$m und für den zweiten Sichter eine Trennkorngröße von 140 $\mu$m.

Insgesamt wurden 258,5 kg Siliciumgranulat gemahlen, davon wurden 235 kg als Mahlprodukt unter dem ersten Sichter gesammelt. Unter dem Zyklon wurden 20,7 kg Feinpartikel gesammelt, im Filter wurden noch 2,8 kg feinste Partikel aus dem Gasstrom entfernt.

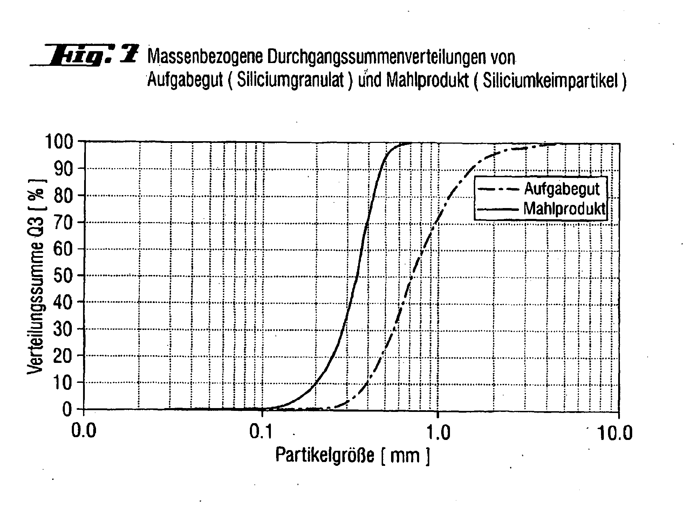

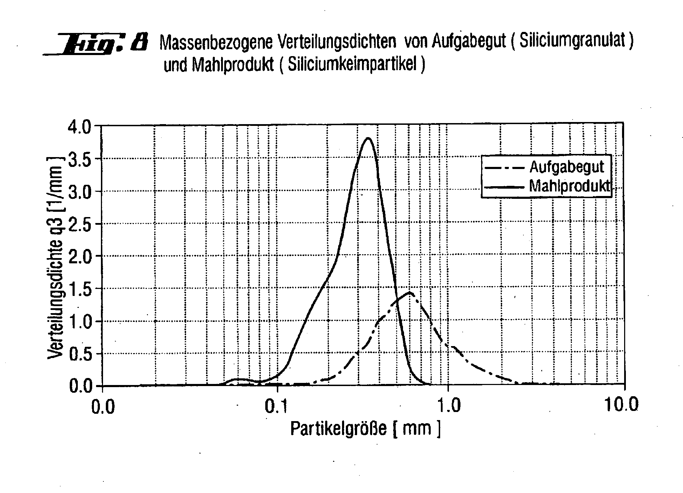

Fig. 7 zeigt die massenbezogenen Durchgangssummenverteilungen von Aufgabegut (Siliciumgranulat) und Mahlprodukt (Silciumkeimpartikel). Fig. 8 zeigt die massenbezogenen Verteilungsdichten von Aufgabegut (Siliciumgranulat) und Mahlprodukt (Siliciumkeimpartikel). Die Siliciumkeimpartikel hatten einen mittleren Durchmesser (massebezogen) von 337 $\mu$m. Der Anteil an unerwünschtem Grob- und Feinanteil (größer 500 $\mu$m bzw. kleiner 150 $\mu$m) lag bei ca. 8 %.

Der spezifische Stickstoffverbrauch lag bei 3,93 kg Gas pro kg Aufgabegut bzw. bei 4,32 kg Gas pro kg Mahlprodukt. Die Ausbeute an Mahlprodukt bezogen auf das Aufgabegut lag bei 90,9 %, die Ausbeute an Mahlprodukt im Zielkorngrößenbereich zwischen 150 $\mu$m und 500 $\mu$m bezogen auf das Aufgabegut lag bei 83,6 %.

Das Aufgabegut und das Mahlprodukt wurden in Anlehnung an ASTM F1724-01 mit Massenspektrometrie (ICP-MS: inductively-coupledplasma mass-spectrometry) auf metallische Kontamination untersucht. Die Ergebnisse für die Metalle Eisen, Chrom und Nickel lagen für Aufgabegut und Mahlprodukt jeweils unter den Nachweisgrenzen des Analyseverfahrens. Die Nachweisgrenzen lagen bei 2100 pptw für Eisen, bei 170 pptw für Chrom und bei 400 pptw für Nickel. Eine metallische Kontamination des Siliciumgranulates während der Mahlung liegt demnach maximal im Bereich oder unterhalb der Nachweisgrenzen des Analyseverfahrens.

**Patentansprüche**

1.   Vorrichtung zur Herstellung von Siliciumkeimpartikeln einer Größe von 50 $\mu$m bis 1000 $\mu$m aus einem Siliciumgranulat einer Größe von 300 $\mu$m bis 5000 $\mu$m umfassend eine vertikal angeordnete zylindrische Strahlkammer (8) mit einer Strahldüse (4) am Boden der Strahlkammer (8), durch die ein Mahlgasstrom (1) in die Strahlkammer (8) eingebracht werden kann, einen direkt an die Strahlkammer (8) stich anschließenden Gegenstrom-Schwerkraftsichter (9) und einen Einlass (6) für ein Siliciumgranulat, **dadurch gekennzeichnet, dass** die Strahlkammer (8) eine Länge hat, die für eine Aufweitung des Mahlgastromes auf den Querschnitt der Strahlkammer ausreicht und die Strahlkammer (8) einen kleineren Strömungsquerschnitt hat als der Gegenstrom-Schwerkraftsichter (9).

2. Vorrichtung gemäß Anspruch 1, **dadurch gekennzeichnet, dass** der Querschnitt der Strahlkammer (8) mindestens 10 % bis 30 % bevorzugt 20 % bis 30 % kleiner ist als der Querschnitt des Gegenstrom-Schwerkraftsichters.

3. Vorrichtung gemäß einem der Ansprüche 1 oder 2, **dadurch gekennzeichnet, dass** die Strahlkammer (8) mindestens doppelt so lang ist, bevorzugt 2 bis 8 mal so lang ist, wie die Strecke, die der Mahlgasstrom (1) von dem Austritt aus der Düse (4) bis zur Aufweitung auf den Querschnitt der Strahlkammer benötigt.

4. Vorrichtung gemäß einem der Ansprüche 1 bis 3, **dadurch gekennzeichnet, dass** der Einlass (6) des Siliciumgranulats (2) in den Sichter erfolgt.

5. Vorrichtung gemäß einem der Ansprüche 1 bis 4, **dadurch gekennzeichnet, dass** eine Wägeeinheit (19) vorhanden ist, die das Gewicht an Siliciumpartikeln in Strahlkammer (8) und Sichter (9) ermittelt.

6. Vorrichtung gemäß Anspruch 5, **dadurch gekennzeichnet, dass** das Gewicht an Siliciumpartikeln über eine Regeleinheit für die Dosierung des Siliciumgranulats (2) so geregelt werden kann, dass eine optimale Effizienz der Mahlung erzielt werden kann.

7. Vorrichtung gemäß einem der Ansprüche 1 bis 6, **dadurch gekennzeichnet, dass** der Gegenstrom-Schwerkraftsichter (9) ein Zickzack-Sichters mit rechteckigem Strömungsquerschnitt ist.

8. Vorrichtung gemäß Anspruch 7, **dadurch gekennzeichnet, dass** sich an den ersten Gegenstrom-Schwerkraftsichter (9) ein zweiter Gegenstrom-Schwerkraftsichter (22), bevorzugt ein Zickzack-Sichter mit rechteckigem Strömungsquerschnitt, der größer ist als der Strömungsquerschnitt des ersten Sichters, anschließt.

9. Vorrichtung gemäß Anspruch 1 bis 8, **dadurch gekennzeichnet, dass** im Einlassbereich eines Sichters (9, 22) ein zusätzlicher Gaseinlass (14, 24) für ein Sichtgas vorhanden ist.

10. Vorrichtung gemäß Anspruch 1 bis 9, **dadurch gekennzeichnet, dass** die mit Siliciumpartikeln in Berührung kommenden Teile aus einer äußeren metallischen Hülle mit einer Innenwand, die mit einer Beschichtung versehen ist, bestehen.

11. Vorrichtung gemäß Anspruch 10, **dadurch gekennzeichnet, dass** die Beschichtung aus Silicium in mono- oder polykristalliner Form oder einem Kunststoff, bevorzugt Polyethylen, Polypropylen, Polytetrafluorethylen, Polyurethan, Ethylen-Tetrafluorethylen oder Halar® besteht.

12. Vorrichtung gemäß Anspruch 10 oder 11, **dadurch gekennzeichnet, dass** in die mit der Beschichtung versehenen Teile formschlüssig ein Inliner, bevorzugt aus polykristallinem oder monokristallinem Silicium oder Quarz, formschlüssig eingebaut ist.

13. Verfahren zum Zerkleinern von Siliciumgranulat zu Siliciumkeimpartikeln unter Einsatz einer Vorrichtung gemäß einem der Ansprüche 1 bis 12, bei dem ein Siliciumgranulat **dadurch** zerkleinert wird, dass sich aus dem Siliciumgranulat in der Mahlzone (10) eine Wirbelschicht (7) hoher Feststoffkonzentration bildet und dass einzelne Siliciumpartikel des Siliciumgranulats in einer zylindrischen Strahlkammer (8), in der nur eine geringe Feststoffkonzentration vorliegt, durch einen Mahlgasstrom hoher Geschwindigkeit beschleunigt werden und auf die Wirbelschicht (7) hoher Feststoffkonzentration auftreffen, wobei Siliciumgranulat und Siliciumpartikel zerbrechen.

14. Verfahren gemäß Anspruch 13, **dadurch gekennzeichnet, dass** die hohe Feststoffkonzentration bei 20 bis 50 Vol.% liegt und die geringe Feststoffkonzentration weniger als 10 Vol.%., bevorzugt weniger als 5 Vol.% ist, jedoch mehr als 0,1 Vol.% beträgt.

15. Verfahren gemäß Anspruch 13, oder 14, **dadurch gekennzeichnet, dass** die zu zerkleinernden Siliciumgranulatpartikel eine Größe von 300 μm bis 5000 μm haben.

16. Verfahren gemäß einem der Ansprüche 13 bis 15, **dadurch gekennzeichnet, dass** als Mahlgas (1) Luft, Argon oder Stickstoff eingesetzt wird, besonders bevorzugt gereinigter Stickstoff, Reinheit von größer 99,9995 Vol.%.

17. Verfahren gemäß einem der Ansprüche 13 bis 16, **dadurch gekennzeichnet, dass** der Mahlgasstrahl mit einer Geschwindigkeit an der Düse von mehr als 300 m/s in die Strahlkammer (8) eintritt.

**EP 1 754 539 B1**

**Claims**

1. Apparatus for producing silicon seed particles of a size of from 50 μm to 1000 μm from silicon granules of a size of from 300 μm to 5000 μm, comprising a vertically disposed cylindrical jet chamber (8) having a jet nozzle (4) at the base of the jet chamber (8), through which a milling gas stream (1) can be introduced into the jet chamber (8), a countercurrent gravity separator (9) directly adjoining the jet chamber (8) and an inlet (6) for silicon granules, **characterized in that** the jet chamber (8) has a length which is sufficient to widen the milling gas stream to the cross section of the jet chamber, and the jet chamber (8) has a smaller cross section of flow than the countercurrent gravity separator (9).

2. Apparatus according to Claim 1, **characterized in that** the cross section of the jet chamber (8) is at least 10% to 30%, preferably 20% to 30%, smaller than the cross section of the countercurrent gravity separator.

3. Apparatus according to one of Claims 1 or 2, **characterized in that** the jet chamber (8) is at least twice as long, preferably 2 to 8 times as long, as the distance which the milling gas stream (1) requires from its emergence from the nozzle (4) until the point at which it has widened to the cross section of the jet chamber.

4. Apparatus according to one of Claims 1 to 3, **characterized in that** the inlet (6) for the silicon granules (2) opens into the separator.

5. Apparatus according to one of Claims 1 to 4, **characterized in that** there is a weighing unit (19) which determines the weight of silicon particles in jet chamber (8) and separator (9).

6. Apparatus according to Claim 5, **characterized in that** the weight of silicon particles can be controlled by a control unit for the metering of the silicon granules (2) in such a way that optimum milling efficiency can be achieved.

7. Apparatus according to one of Claims 1 to 6, **characterized in that** the countercurrent gravity separator (9) is a zigzag separator with a rectangular cross section of flow.

8. Apparatus according to Claim 7, **characterized in that** a second countercurrent gravity separator (22), preferably a zigzag separator with a rectangular cross section of flow which is larger than the cross section of flow of the first separator, follows the first countercurrent gravity separator (9).

9. Apparatus according to Claims 1 to 8, **characterized in that** an additional gas inlet (14, 24) for a classifying gas is present in the inlet region of a separator (9, 22).

10. Apparatus according to Claims 1 to 9, **characterized in that** the parts which come into contact with silicon particles comprise an outer metallic casing with an inner wall provided with a lining.

11. Apparatus according to Claim 10, **characterized in that** the lining consists of silicon in monocrystalline or polycrystalline form or a plastics material, preferably polyethylene, polypropylene, polytetrafluoroethylene, polyurethane, ethylene-tetrafluoroethylene or Halar®.

12. Apparatus according to Claim 10 or 11, **characterized in that** an inliner, preferably made from polycrystalline or monocrystalline silicon or quartz, is installed in a positively locking manner in the parts provided with the lining.

13. Process for comminuting silicon granules to form silicon seed particles using an apparatus according to one of Claims 1 to 12, in which silicon granules are comminuted by a fluidized bed (7) with a high solids concentration being formed from the silicon granules in the milling zone (10) and by individual silicon particles of the silicon granules being accelerated by a high-speed milling gas stream in a cylindrical jet chamber (8) in which there is only a low solids concentration and impinging on the fluidized bed (7) with a high solids concentration, resulting in crushing of silicon granules and silicon particles.

14. Process according to Claim 13, **characterized in that** the high solids concentration is 20 to 50% by volume and the low solids concentration is less than 10% by volume, preferably less than 5% by volume, but greater than 0.1% by volume.

15. Process according to Claim 13 or 14, **characterized in that** the size of the silicon granule particles to be comminuted

is from 300 μm to 5000 μm.

16. Process according to one of Claims 13 to 15, **characterized in that** the milling gas (1) used is air, argon or nitrogen, particularly preferably purified nitrogen with a purity of greater than 99.9995% by volume.

17. Process according to one of Claims 13 to 16, **characterized in that** the milling gas jet enters the jet chamber (8) at a velocity at the nozzle of more than 300 m/s.

## Revendications

1. Dispositif de fabrication de particules de germes de silicium d'une taille de 50 μm à 1000 μm à partir d'un granulat de silicium d'une taille de 300 μm à 5000 μm, comprenant une chambre à jet cylindrique (8) disposée verticalement avec une buse à jet (4) disposée au fond de la chambre à jet (8) et à travers laquelle un courant de gaz de broyage (1) peut être introduit dans la chambre à jet (8), un séparateur gravimétrique à contre-courant (9), directement raccordé à la chambre à jet (8), et une entrée (6) destinée à un granulat de silicium, **caractérisé en ce que** la chambre à jet (8) a une longueur qui suffit pour un élargissement du courant de gaz de broyage à la section transversale de la chambre à jet et qui présente une section d'écoulement transversale plus petite que celle du séparateur gravimétrique à contre-courant (9).

2. Dispositif selon la revendication 1, **caractérisé en ce que** la section transversale de la chambre à jet (8) est au moins 10 % à 30 %, de préférence 20 % à 30 % plus petite que celle du séparateur gravimétrique à contre-courant.

3. Dispositif selon l'une quelconque des revendications 1 et 2, **caractérisé en ce que** la chambre à jet (8) est au moins deux fois plus longue, de préférence 2 à 8 fois plus longue que la distance dont a besoin le courant de gaz de broyage (1) de la sortie de la buse (4) à l'élargissement à la section transversale de la chambre à jet.

4. Dispositif selon l'une quelconque des revendications 1 à 3, **caractérisé en ce que** l'entrée (6) du granulat de silicium (2) se fait dans le séparateur.

5. Dispositif selon l'une quelconque des revendications 1 à 4, **caractérisé par** la présence d'une unité de pesée (19) qui détermine le poids de particules de silicium dans la chambre à jet (8) et dans le séparateur (9).

6. Dispositif selon la revendication 5, **caractérisé en ce que** le poids des particules de silicium peut être réglé via une unité de réglage pour le dosage du granulat de silicium (2) de manière à pouvoir assurer une efficacité de broyage optimale.

7. Dispositif selon l'une quelconque des revendications 1 à 6, **caractérisé en ce que** le séparateur gravimétrique à contre-courant (9) est un séparateur en zigzag doté d'une section transversale d'écoulement rectangulaire.

8. Dispositif selon la revendication 7, **caractérisé en ce que** l'on raccorde au premier séparateur gravimétrique à contre-courant (9) un second séparateur gravimétrique à contre-courant (22), de préférence un séparateur en zigzag doté d'une section transversale d'écoulement rectangulaire, qui est plus grande que la section transversale d'écoulement du premier séparateur.

9. Dispositif selon les revendications 1 à 8, **caractérisé en ce que** la zone d'entrée d'un séparateur (9, 22) présente une entrée de gaz supplémentaire (14, 24) pour un gaz de séparation.

10. Dispositif selon les revendications 1 à 9, **caractérisé en ce que** les parties venant en contact avec les particules de silicium sont constituées d'une enveloppe métallique externe avec une paroi interne qui est pourvue d'un revêtement.

11. Dispositif selon la revendication 10, **caractérisé en ce que** le revêtement est constitué de silicium sous forme monocristalline ou polycristalline ou d'un matériau synthétique, de préférence du polyéthylène, du polypropylène, du polytétrafluoroéthylène, du polyuréthanne, de l'éthylène-tétrafluoroéthylène ou le produit Halar®.

12. Dispositif selon la revendication 10 ou 11, **caractérisé en ce que** l'on incorpore, par adaptation de forme, un revêtement intérieur, de préférence à base de silicium ou de quartz polycristallin ou monocristallin, dans les parties pourvues du revêtement.

**13.** Procédé de broyage d'un granulat de silicium en particules de germes de silicium en utilisant un dispositif selon l'une quelconque des revendications 1 à 12, dans lequel un granulat de silicium est broyé de manière à former, à partir du granulat de silicium, dans la zone de broyage (10), un lit fluidisé (7) à forte concentration en solides et à accélérer des particules de silicium individuelles du granulat de silicium dans une chambre à jet cylindrique (8), dans laquelle il n'y a qu'une faible concentration en solides, par le biais d'un courant de gaz de broyage à vitesse élevée, en les projetant sur le lit fluidisé (7) à forte concentration en solides, sur lequel le granulat de silicium et les particules de silicium se brisent.

**14.** Procédé selon la revendication 13, **caractérisé en ce que** la forte concentration en solides est de l'ordre de 20 à 50 % en volume et **en ce que** la faible concentration en solides est inférieure à 10 % en volume, de préférence inférieure à 5 % en volume, mais supérieure à 0,1 % en volume.

**15.** Procédé selon la revendication 13 ou 14, **caractérisé en ce que** les particules du granulat de silicium à broyer ont une taille de 300 $\mu$m à 5000 $\mu$m.

**16.** Procédé selon l'une quelconque des revendications 13 à 15, **caractérisé en ce que** l'on utilise comme gaz de broyage (1) de l'air, de l'argon ou de l'azote, mieux encore de l'azote purifié, d'une pureté supérieure à 99,9995 % en volume.

**17.** Procédé selon l'une quelconque des revendications 13 à 16, **caractérisé en ce que** le jet de gaz de broyage pénètre dans la chambre à jet (8) à une vitesse de plus de 300 m/s dans la buse.

**Fig. 1**

**Fig. 2**

*Fig. 3*

*Fig. 4*

*Fig. 5*

## Fig. 6

34a            34b

39

33

32

**_Fig. 1_** Massenbezogene Durchgangssummenverteilungen von
Aufgabegut ( Siliciumgranulat ) und Mahlprodukt ( Siliciumkeimpartikel )

**Fig. 8** Massenbezogene Verteilungsdichten von Aufgabegut ( Siliciumgranulat )
und Mahlprodukt ( Siliciumkeimpartikel )

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3963838 A
- DE 19842078 A1
- US 5496416 A
- US 4207360 A
- US 4314525 A
- JP 57067019 A
- DE 102004048948
- JP 8109013 A
- US 4691866 A
- US 3734413 A
- US 4424199 A
- US 5798137 A
- US 4602743 A
- US 5346141 A
- DE 1135841

**In der Beschreibung aufgeführte Nicht-Patentliteratur**

- **FOKIN, A. P. ; MELNIKOV, V. D.** Grinding Mills In The Production Of Ultrapure Substances - Zhurnal Vses. *Khim. Ob-va im. D. I. Mendeleeva,* 1988, vol. 33 (4), 62.70
- **PERRY, ROBERT H. ; GREEN, DON W.** *Perry's Chemical Engineer's Handbook,* 1997